# EUROPÄISCHE PATENTSCHRIFT

(11) **EP 1 846 271 B1**
(45) Veröffentlichungstag und Bekanntmachung des Hinweises auf die Patenterteilung: **28.04.2010**
(21) Anmeldenummer: 05823537.5
(22) Anmeldetag: 19.12.2005
(51) Int. Cl.: B60R 21/015

(54) **SICHERHEITSSYSTEM**
SAFETY SYSTEM
SYSTEME DE SECURITE

(30) Priorität: 02.02.2005 DE 102005004742
(43) Veröffentlichungstag der Anmeldung: 24.10.2007
(73) Patentinhaber: ROBERT BOSCH GMBH, 70442 Stuttgart (DE)
(72) Erfinder: KÖHLER, Armin, 74343 Sachsenheim (DE); MARCHTHALER, Reiner, 73333 Gingen (DE); LICH, Thomas, 71409 Schwaikheim (DE); MACK, Frank, 70376 Stuttgart (DE)
(86) Internationale Anmeldenummer: PCT/EP2005/056889
(87) Internationale Veröffentlichungsnummer: WO 2006/081897

(56) Entgegenhaltungen:
- WO-A-02/053419
- DE-A1- 10 103 401
- DE-A1- 10 252 227
- DE-A1- 10 307 848
- DE-A1- 19 546 297

## Beschreibung

Die Erfindung betrifft ein Sicherheitssystem nach dem Oberbegriff des Anspruchs 1 und ein Verfahren für die Steuerung eines Sicherheitssystems nach dem Oberbegriff des Anspruchs 9. Sicherheitssysteme der gattungsgemäßen Art werden in Fahrzeugen für den Schutz von Fahrzeuginsassen eingesetzt.

Ein Sicherheitssystem für den Schutz von Fahrzeuginsassen ist beispielsweise aus dem Aufsatz von W. Suchowerskyj, "Evolution en matiere de detecteurs de choc", in 1141 Ingenieurs de l'Automobile (1982) No.6, S.69-77, Paris, bekannt. In einem derartigen Sicherheitssystem werden im Wesentlichen beschleunigungsempfindliche Sensoren als Crashsensoren eingesetzt. Die Auswertung ihrer Ausgangssignale soll die möglichst frühzeitige Erkennung von gefährlichen Crashs ermöglichen, um im Falle von Gefahr Sicherungsmaßnahmen, wie insbesondere die Auslösung von Rückhaltemitteln für die Fahrzeuginsassen zu bewirken.Auch nach der Einführung des Airbags kam es jedoch leider immer wieder, trotz vergleichsweise niedriger Geschwindigkeit, zu schweren oder sogar tödlichen Verletzungen von Fahrzeuginsassen. Meist waren die Fahrzeuginsassen hierbei nicht angeschnallt bzw. sehr nahe vor dem als Rückhaltemittel eingesetzten Airbagmodul platziert Um den Fahrzeuginsassen einen optimalen Schutz im Falle eines Unfalls zu gewähren, ist es deshalb notwendig, vor der Zündung des Airbags die Position des Oberkörpers und des Kopfes des Fahrzeuginsassen zu kennen. Es ist bereits bekannt, die Position und Bewegungsdynamik von Fahrzeuginsassen durch den Einsatz von so genannten IOS-Sensoren (Videokamera, OC-Matte, Kraftmessbolzen, Dehnungsmessstreifen, etc.) zu erfassen und daraus den Insassen mit Hilfe der Kenntnis von den auf den Insassen wirkenden Beschleunigungen in x- und y-Richtung (DIN 70000) zu klassifizieren (DE 102 33 098). Darüber hinaus ist es auch möglich, mit Hilfe der gleichen Informationen (Dynamik des Insassen und den Beschleunigungen) die Trajektorie eines Insassen vorherzusagen (DE 10246255).

Das Dokument DE 19546297 wird als nächstliegender Stand der Technik angesehen und zeigt die Merkmale der Präambel des unabhängigen Anspruchs 1.

Die Erfindung ermöglicht eine Verbesserung der bekannten Sicherheitssysteme, die jetzt in die Lage versetzt werden, das Geschehen in dem Innenraum eines Kraftfahrzeugs noch präziser zu erfassen und daraufhin beispielsweise das Aufblasverhalten eines als Rückhaltemittel vorgesehenen Airbags zu verändern. So kann, situationsbedingt, der Airbag nicht bzw. weniger aggressiv aufgeblasen werden, wenn sich ein Insasse in dem Aufblasbereich des Airbags befindet.

Dies wird insbesondere dadurch erreicht, dass bereits vor einem Unfall zuverlässigere Informationen über die Insassen und deren Position in Bezug auf einen Airbag erfasst werden. Mit Hilfe dieser Erkenntnis besteht dann die Möglichkeit, den Airbag individuell und somit optimal an die Art des Unfalls (Frontal-, Seiten-, Heck-Crash, etc.) und den betroffenen Insassen anzupassen. Hierzu wird eine neue Methode für die Klassifizierung und Lokalisierung von Insassen eingesetzt. Die Vorteile liegen insbesondere darin, dass ein verbesserter Insassenschutz durch eine genauere Lagebestimmung eines Fahrzeuginsassen möglich ist, ohne dass, zumindest bei modernen Pkw, zusätzliche Kosten für eine neue Sensorik entstehen. Diese Fahrzeuge besitzen heute schon die notwendigen Beschleunigungssensoren zur Crashsensierung und die Sensoren zur Bestimmung des Gewichts von Fahrzeuginsassen. Es ist sogar denkbar, dass Versicherungen zukünftig Fahrzeuge mit solchen Rückhaltesystemen aufgrund der geringeren Verletzungsgefahr und der somit geringeren Genesungskosten in günstigere Versicherungsklassen einstufen. Besonders vorteilhaft kann die Position von Fahrzeuginsassen durch Zustandsbeobachter erfasst werden, die Ausgangssignale von Sensoren auswerten.

Ausführungsbeispiele der Erfindung werden nachfolgend unter Bezug auf die Zeichnung erläutert. Dabei zeigt:
- Figur 1: ein Blockschaltbild eines Sicherheitssystems;
- Figur 2: ein weiteres Blockschaltbild für die situationsabhängige Abschaltung der Parameteridentifikation;
- Figur 3: ein weiteres Blockschaltbild für die Erläuterungeines Frontalcrashs;
- Figur 4: ein weiteres Blockschaltbild für die Erläuterung eines Seiten- und/oder Überschlagcrashs.

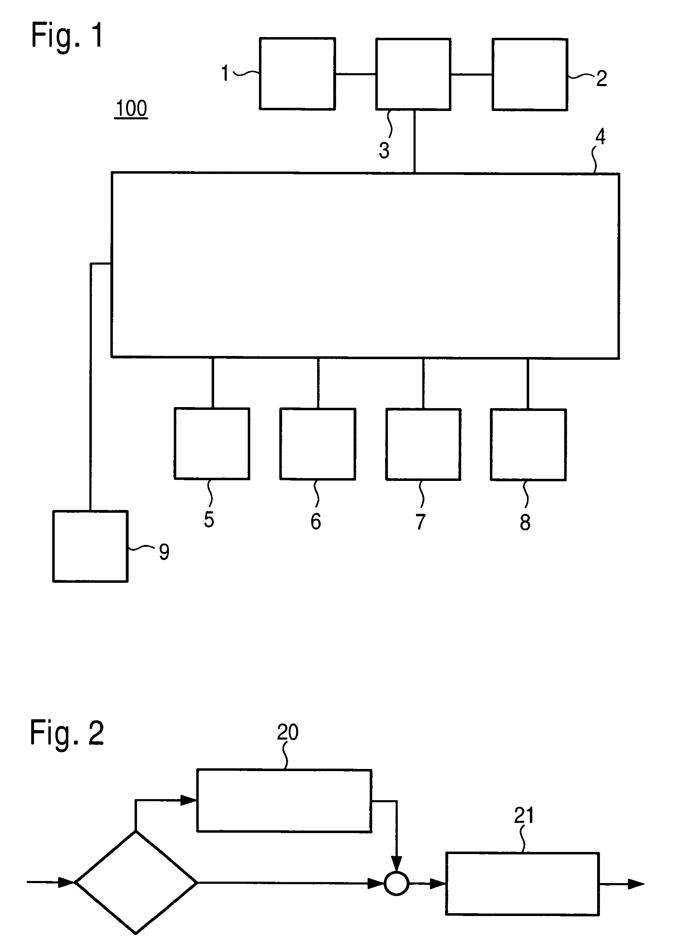

Figur 1 zeigt ein Blockschaltbild eines Sicherheitssystems 100. Das Sicherheitssystem 100 umfasst wenigstens einen Sensor 1, der das Gewicht von Fahrzeuginsassen erfasst. Zu diesem Zweck ist der Sensor 1 vorzugsweise in einem Sitz des Fahrzeugs angeordnet. Weiterhin umfasst das Sicherheitssystem 100 wenigstens einen Sensor 2, der für Beschleunigung empfindlich ist. Die Sensoren 1 und 2 sind mit einem Funktionsmodul 3 verbunden, das die Signale der Sensoren 1, 2 auswertet. Diese Auswertung bezieht sich insbesondere auf die Lokalisierung und Klassifizierung von Fahrzeuginsassen. Das Funktionsmodul 3 ist mit einem Steuergerät 4 verbunden. Mit dem Steuergerät 4 sind weitere Sensoren 5,6,7,8 verbunden. Diese Sensoren messen Betriebskenngrößen des Fahrzeugs, wie insbesondere Beschleunigung und Drehraten um die Achsen des Fahrzeugs Weiterhin erfassen diese Sensoren einen Aufprall auf das Fahrzeug, in dem Front- Seiten- oder Heckbereich des Fahrzeugs. Das Steuergerät 4 ist weiterhin mit Rückhaltemitteln 9, wie Airbags, Gurtstraffern und dergleichen, verbunden. Bei einer kritischen Unfallsituation berücksichtigt das Steuergerät 4 neben den Ausgangssignalen der Sensoren 1,2,5,6,7,8 auch das Ausgangssignal des Funktionsmoduls 3. Dieses Funktionsmodul stellt Informationen über die Fahrzeuginsassen und deren Position zur Verfügung. Durch Verwertung dieser Informationen kann beispielsweise bei dem Auftreten eines Seitencrashs entschieden werden, ob Airbags überhaupt aktiviert oder nur zum Teil aufgeblasen werden. Die Erfindung geht dabei von der Erkenntnis aus, dass aufgrund einer Modellierung des Insassen und dessen Kopplung durch Feder-Dämpfer-Systeme an das Fahrzeug und die im Sitz verbauten Gewichtssensoren sich mit Hilfe von Kraft- und Beschleunigungssensoren und mittels wenigstens eines Beobachters die zunächst unbekannte Position des Insassen wesentlich genauer als bisher abschätzen lässt. Vorteilhaft können diese Beobachter mit einer a priori Struktur, beispielsweise nach Art eines Luenberger Beobachters, oder als Beobachter mit einer a posteriori Struktur, beispielsweise als Kalmanfilter, realisiert werden. Dabei eignet sich das Kalmanfilter aufgrund seiner rekursiven Formeln besonders gut für eine Implementierung auf Mikrocontrollern. Der Beobachter ist dann in der Lage, Modellungenauigkeiten sowie Störgrößen, wie z.B. das Anstoßen des Insassen an die Seitentür des Fahrzeugs, zu kompensieren. Vorteilhaft werden unbekannte oder nur sehr schwer ermittelbare Modellgrößen mittels einer Parameteridentifikation bestimmt, um eine möglichst gute Abschätzung der Position des Insassen zu ermöglichen. Dazu ist das in Figur 2 dargestellte Funktionsmodul 20 vorgesehen. Wie aus dem in Figur 2 dargestellten Blockdiagramm ersichtlich ist, kann diese Parameterabschätzung vorteilhaft zusätzlich zu einem Zustandsbeobachter 21 betrieben und, situationsabhängig, auch abgeschaltet werden.

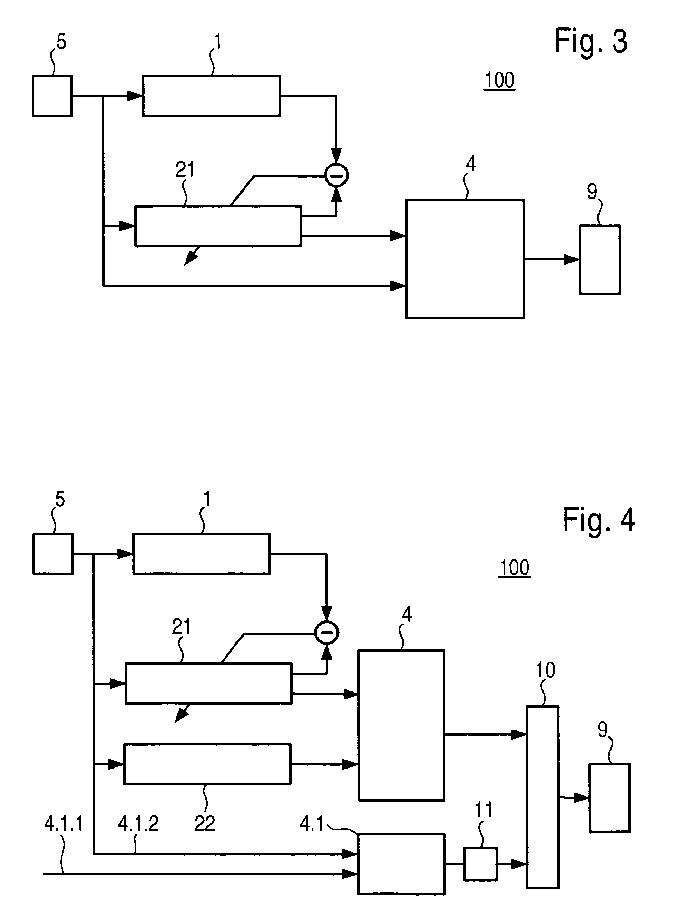

Im Folgenden wird die Funktionsweise des Sicherheitssystems 100 anhand einiger typischer Unfallsituationen erläutert. Unter Bezug auf Figur 3 wird zunächst der Ablauf bei einem Frontalcrash betrachtet. Bei dem Frontalcrash erfährt das Fahrzeug eine starke negative Beschleunigung. Von einem für Beschleunigung empfindlichen Sensor 5 wird ein Ausgangssignal erzeugt. Infolge der Verzögerung des Fahrzeugs bewegt sich der Fahrzeuginsasse nach vorn. Diese Bewegung des Fahrzeuginsassen bewirkt eine Veränderung der Kraft in z-Richtung F(t), die auf den Sitz, auf dem der Insasse sitzt, wirkt. Diese Kraft wird durch den Gewichtssensor 1 gemessen. Die Ausgangssignale der Sensoren 1 und 5 werden dem Zustandsbeobachter 21 zugeleitet. Gestützt auf die Information aus dem Sensor 5 und dem Sensor 1 im Sitz lässt sich die Position des Insassen mit Hilfe des Zustandsbeobachters 21 abschätzen. Die von dem Zustandsbeobachter 21 ermittelte Position des Insassen wird dann an das Steuergerät 4 weitergeben. Dem Steuergerät 4 wird auch das Ausgangssignal des Sensors 5 zugeleitet. Das Steuergerät 4 ermittelt dann, z. B. durch Integration des Beschleunigungssignals und durch einen Vergleich mit einem vorgebbaren Schwellwert, den exakten Zündzeitpunkt für das Rückhaltemittel 9.

Im Folgenden wird unter Bezug auf das in Figur 4 dargestellte Diagramm die Funktionsweise des Sicherheitssystems 100 bei einem Seiten- und/oder Überschlagcrash beschrieben. Die bei diesem Unfallereignis auftretende Beschleunigung wird wiederum von einem beschleunigungsempfindlichen Sensor 5 erfasst. Die infolge der seitlich angreifenden Kraft bewirkte seitliche Bewegung des Fahrzeuginsassen wird durch den Sensor 1 erfasst. Die Ausgangssignale der Sensoren 1 und 5 werden einem Zustandsbeobachter 21 zugeleitet, der ein erstes Modell der seitwärts gerichteten Bewegung des Fahrzeuginsassen erzeugt. Das Ausgangssignal des Zustandsbeobachters 21 wird dem Steuergerät 4 zugeleitet. Das Steuergerät 4 wiederum steuert die Auslösung von Rückhaltemitteln 9. Befindet sich der Insasse zum Zeitpunkt der Auslöseentscheidung, die durch das Steuergerät 4 getroffen werden soll, jedoch in einer so genannten "Keep out zone", so darf das Rückhaltemittel 9, beispielsweise ein Airbag, nicht ausgelöst werden. Unter "Keep out zone" versteht man einen Bereich des Fahrzeuginnenraums, der den Einsatz eines Rückhaltemittels wenig sinnvoll erscheinen lässt, wenn sich ein Fahrzeuginsasse in diesem Bereich aufhält. Ein Einsatz kann deshalb wenig sinnvoll erscheinen, weil das Rückhaltemittel kaum etwas zum Schutz eines Fahrzeuginsassen beiträgt oder ihn sogar gefährdet. Beispielsweise würde die Auslösung eines Beifahrerairbags einen gerade in Richtung auf die Frontscheibe vorgebeugt sitzenden Beifahrer stark gefährden. Vorteilhaft erfolgt dabei die Bestimmung der "Keep out zone" mit Hilfe eines zweiten Zustandsbeobachters 22, der jedoch lediglich die Signale des Sensors 5, also die Beschleunigung des Fahrzeugs, nicht jedoch die Signale des Sensors 1, das heißt also, das Gewicht des Fahrzeuginsassen, berücksichtigt. Die Lösung zur Bestimmung der "Keep out zone" mit Hilfe der Bewegung des Masseschwerpunktes eines Fahrzeuginsassen beruht darauf, dass man die Position des Masseschwerpunkts von zwei Zustandsbeobachtern 21,22 mit zwei verschiedenen Verfahren schätzen lässt. Das eine Verfahren bestimmt mit Hilfe des ersten Zustandsbeobachters 21 die Position des Insassen. Dieser Zustandsbeobachter 21 erkennt zum Beispiel den Aufprall des Insassen auf die Tür des Fahrzeugs und gibt dann die tatsächliche Position aus. Führt man parallel zu der Schätzung des ersten Zustandsbeobachters 21 eine zweite Schätzung mit einem zweiten Zustandsbeobachter 22 durch, der lediglich die Beschleunigung des Fahrzeugs, nicht jedoch die Ausgangssignale der Gewichtssensoren berücksichtigt, so kann mit dieser zweiten Schätzung die durch eine äußere Störung, wie beispielsweise den Aufprall auf die Tür, veränderte Position des Fahrzeuginsassen nicht korrigiert werden. In diesem Fall liefern die beiden Schätzverfahren unterschiedliche Ergebnisse.

In dem Funktionsmodul 4.1 werden die Ergebnisse der beiden Schätzverfahren (Zustandsbeobachter 21,22) miteinander verglichen. Das Ergebnis dieses Vergleichs wird vorzugsweise mit einem vorgebbaren Schwellwert verglichen. Wird dieser Schwellwert überschritten, dann wird unterstellt, dass sich der Fahrzeuginsasse in der "Keep out zone" befindet. In diesem Fall kommt es nicht zu einer Auslösung von Rückhaltemitteln 9. Sollte jedoch der Schwellwert nicht erreicht werden, kommt es zu einer Auslösung der Rückhaltemittel 9.

Die Erkennung eines Seiten- und/oder Überschlagcrashs wird durch ein Funktionsmodul 4.1 durchgeführt, das vorteilhaft auch Bestandteil des Steuergeräts 4 sein kann. Die Verknüpfung zwischen den beiden Entscheidungsalternativen, Auslösen oder Nichtauslösen des Rückhaltemittels 9, geschieht vorteilhaft mittels einer logischen Und-Verknüpfung in dem Funktionsmodul 10. Mit dieser Systemauslegung ist es vorteilhaft auch möglich, die Rückhaltemittel 9, insbesondere einen Airbag, verzögert auszulösen. Sollte sich der Insasse z. B. während der Auslöseentscheidung über das Vorliegen eines des Seiten- oder Überschlagscrashs in der "Keep out zone" befinden, sich aber kurz danach durch den heftigen Aufprall an der Tür wieder von dieser entfernen, so kann, zeitverzögert, sobald der Insasse die "Keep out zone" wieder verlassen hat, der Seitenairbag gezündet werden. Hierzu wird die Auslöseentscheidung an dem Ausgang des Funktionsmoduls 4.1 mittels eines Halteglieds 11 für einen längeren Zeitraum gehalten. Des Weiteren ist es denkbar, falls in Zukunft zweistufige Seitenairbags eingesetzt würden, mit diesem Verfahren statt einer kompletten Unterdrückung des Seitenairbags, beispielsweise nur die zweite Stufe des Seitenairbags zu unterdrücken.

### Bezugszeichen

- 1: Sensor
- 2: Sensor
- 3: Funktionsmodul
- 4: Steuergerät
- 5: Sensor
- 6: Sensor
- 7: Sensor
- 8: Sensor
- 9: Rückhaltemittel
- 10: Funktionsmodul
- 11: Halteglied
- 20: Funktionsmodul
- 21: Zustandsbeobachter
- 22: Zustandsbeobachter
- 100: Sicherheitssystem

## Patentansprüche

1. Sicherheitssystem (100) für Fahrzeuginsassen mit einer Einrichtung für die Positionsbestimmung eines Fahrzeuginsassen, **dadurch gekennzeichnet, dass** das Sicherheitssystem (100) wenigstens einen Zustandsbeobachter (21) für die Positionsbestimmung des Fahrzeuginsassen umfasst, wobei dem Zustandsbeobachter (21) die Ausgangssignale von Sensoren (1,5) zugeführt werden, die die Beschleunigung des Fahrzeugs und das Gewicht und/oder den Massenschwerpunkt des Fahrzeuginsassen erfassen.

2. Sicherheitssystem nach Anspruch 1, **dadurch gekennzeichnet, dass** ein zweiter Zustandsbeobachter (22) vorgesehen ist, dem die Ausgangssignale von Sensoren (5) zugeführt werden, die die Beschleunigung des Fahrzeugs messen.

3. Sicherheitssystem nach einem der vorhergehenden Ansprüche, **dadurch gekennzeichnet, dass** ein Zustandsbeobachter mit einer a priori-Struktur, insbesondere ein Luenberger-Beobachter, vorgesehen ist.

4. Sicherheitssystem nach einem der vorhergehenden Ansprüche, **dadurch gekennzeichnet, dass** ein Zustandsbeobachter (21,22) mit einer a posteriori-Struktur, insbesondere ein Kalmanfilter, vorgesehen ist.

5. Sicherheitssystem nach einem der vorhergehenden Ansprüche, **dadurch gekennzeichnet, dass** ein Steuergerät (4) vorgesehen ist, dem die Ausgangssignale der Beobachter (21,22) zugeführt werden, und das aus diesen Ausgangssignalen die so genannte "Keep out zone" ermittelt.

6. Sicherheitssystem nach einem der vorhergehenden Ansprüche, **dadurch gekennzeichnet, dass** ein Funktionsmodul (4.1) vorgesehen ist, das aus Signalen von Sensoren das Vorliegen eines Seiten- und/oder Überschlagcrashs ermittelt.

7. Sicherheitssystem nach einem der vorhergehenden Ansprüche, **dadurch gekennzeichnet, dass** ein Funktionsmodul (10) für die Verarbeitung der Ausgangssignale des Steuergeräts (4) und des Funktionsmoduls (4.1) vorgesehen ist.

8. Sicherheitssystem nach einem der vorhergehenden Ansprüche, **dadurch gekennzeichnet, dass z**wischen dem Funktionsmodul (4.1) und dem Funktionsmodul (10) ein Halteglied (11) vorgesehen ist.

9. Verfahren für die Steuerung eines Sicherheitssystems (100) für Fahrzeuginsassen, bei dem die Auslösung von Rückhaltemitteln (9) von der Position des Fahrzeuginsassen abhängig ist, **dadurch gekennzeichnet, dass** die Position des Fahrzeuginsassen von wenigstens einem Zustandsbeobachter (21) erfasst wird, der Sensorsignale von Sensoren (1,5) auswertet, die die Beschleunigung des Fahrzeugs und das Gewicht des Fahrzeuginsassen und/oder seinen Massenschwerpunkt erfassen.

10. Verfahren nach Anspruch 9, **dadurch gekennzeichnet, dass** die Position des Fahrzeuginsassen von zwei Zustandsbeobachtern erfasst wird, wobei der erste Zustandsbeobachter (21) die Ausgangssignale von Sensoren auswertet, die die Beschleunigung des Fahrzeugs und das Gewicht des Fahrzeuginsassen erfassen und wobei der zweite Zustandsbeobachter (22) die Beschleunigung des Fahrzeugs erfasst.

11. Verfahren nach einem der Ansprüche 9 bis 10, **dadurch gekennzeichnet, dass** mit Hilfe wenigstens eines Zustandsbeobachters (21,22) Ausgangssignale von Sensoren (1,5) bewertet und in Abhängigkeit von dieser Bewertung Rückhaltemittel für den Schutz von Insassen gesteuert werden.

12. Verfahren nach einem der Ansprüche 9 bis 11, **dadurch gekennzeichnet, dass** das Verhalten eines Insassen modellmäßig erfasst wird, wobei bei dem Modell wenigstens das Gewicht des Insassen, die Bewegung seines Massenschwerpunkts und eine Kopplung des Insassen an das Fahrzeug berücksichtigt werden.

13. Verfahren nach einem der Ansprüche 9 bis 12, **dadurch gekennzeichnet, dass** unbekannte bzw. schwer ermittelbare Modellgrößen mittels einer Parameteridentifikation bestimmt werden.

14. Verfahren nach einem der Ansprüche 9 bis 13, **dadurch gekennzeichnet, dass** die Parameteridentifikation, situationsabhängig, abschaltbar ist.

## Claims

1. Safety system (100) for vehicle occupants, having a device for determining the position of a vehicle occupant, **characterized in that** the safety system (100) comprises at least one state observer (21) for determining the position of the vehicle occupant, wherein the output signals of sensors (1, 5), which sense the acceleration of the vehicle and the weight and/or the centre of mass of the vehicle occupant, are fed to the state observer (21).

2. Safety system according to Claim 1, **characterized in that** a second state observer (22), to which the output signals of sensors (5) which measure the acceleration of the vehicle are fed, is provided.

3. Safety system according to one of the preceding claims, **characterized in that** a state observer with an a priori structure, in particular a Luenberger observer, is provided.

4. Safety system according to one of the preceding claims, **characterized in that** a state observer (21, 22) is provided with an a posteriori structure, in particular a Kalman filter.

5. Safety system according to one of the preceding claims, **characterized in that** a control unit (4) to which the output signals of the observers (21, 22) are fed and which determines what is referred to as the keep-out zone from these output signals, is provided.

6. Safety system according to one of the preceding claims, **characterized in that** a function module (4.1), which determines the presence of a side crash and/or rollover crash from signals of sensors, is provided.

7. Safety system according to one of the preceding claims, **characterized in that** a function module (10) for processing the output signals of the control unit (4) and of the function module (4.1) is provided.

8. Safety system according to one of the preceding claims, **characterized in that** a sample-and-hold element (11) is provided between the function module (4.1) and the function module (10).

9. Method for controlling a safety system (100) for vehicle occupants, in which method the triggering of restraint means (9) is dependent on the position of the vehicle occupant, **characterized in that** the position of the vehicle occupant is sensed by at least one state observer (21) which evaluates the sensor signals of sensors (1,5) which sense the acceleration of the vehicle and the weight of the vehicle occupant and/or his/her centre of mass.

10. Method according to Claim 9, **characterized in that** the position of the vehicle occupant is sensed by two state observers, wherein the first state observer (21) evaluates the output signals of sensors which sense the acceleration of the vehicle and the weight of the vehicle occupant and wherein the second state observer (22) senses the acceleration of the vehicle.

11. Method according to one of Claims 9 to 10,
**characterized in that** output signals of sensors (1, 5) are evaluated using at least one state observer (21, 22), and restraint means for protecting vehicle occupants are controlled as a function of this evaluation.

12. Method according to one of Claims 9 to 11, **characterized in that** the behaviour of a vehicle occupant is sensed on a model basis, wherein at least the weight of the vehicle occupant, the movement of his/her centre of mass and a coupling of the vehicle occupant to the vehicle are taken into account in the model.

13. Method according to one of Claims 9 to 12, **characterized in that** model variables which are unknown or difficult to determine are obtained by means of a parameter identification process.

14. Method according to one of Claims 9 to 13, **characterized in that** the parameter identification can be switched off as a function of the situation.

## Revendications

1. Système de sécurité (100) pour les passagers d'un véhicule, présentant un dispositif de détermination de la position d'un passager du véhicule,
**caractérisé en ce que**
le système de sécurité (100) comprend au moins un dispositif (21) d'observation de position qui détermine la position du passager du véhicule,
**en ce que** les signaux de sortie des détecteurs (1, 5) qui saisissent l'accélération du véhicule et le poids et/ou le centre de masse du passager du véhicule sont apportés au dispositif (21) d'observation de position.

2. Système de sécurité selon la revendication 1, **caractérisé en ce qu'**il présente un deuxième dispositif (22) d'observation de position auquel les signaux de sortie de détecteur (5) qui mesure l'accélération du véhicule sont apportés.

3. Système de sécurité selon l'une des revendications précédentes, **caractérisé en ce qu'**il présente un dispositif d'observation de position doté d'une structure à priori, en particulier un dispositif d'observation dit Luenberger.

4. Système de sécurité selon l'une des revendications précédentes, **caractérisé en ce qu'**il présente un dispositif (21, 22) d'observation d'état doté d'une structure à priori, en particulier un filtre de Kalman.

5. Système de sécurité selon l'une des revendications précédentes, **caractérisé en ce qu'**il présente un appareil de commande (4) auquel sont apportés les signaux de sortie du dispositif d'observation (21, 22), et qui détermine la zone dite "de non séjour" à partir de ces signaux de sortie.

6. Système de sécurité selon l'une des revendications précédentes, **caractérisé en ce qu'**il présente un module fonctionnel (4.1) qui détermine la présence d'une collision latérale et/ou une collision avec tonneau à partir de signaux de détecteurs.

7. Système de sécurité selon l'une des revendications précédentes, **caractérisé en ce qu'**il présente un module fonctionnel (10) qui traite les signaux de sortie de l'appareil de commande (4) et du module fonctionnel (4.1).

8. Système de sécurité selon l'une des revendications précédentes, **caractérisé en ce qu'**il présente un organe de maintien (11) situé entre le module fonctionnel (4.1) et le module fonctionnel (10).

9. Procédé de contrôle d'un système de sécurité (100) pour les passagers d'un véhicule, dans lequel le déclenchement de moyens de retenue (9) dépend de la position du passager du véhicule,
**caractérisé en ce que**
la position du passager du véhicule est détectée par au moins un dispositif (21) d'observation de position qui évalue des signaux de détecteurs (1, 5) qui saisissent l'accélération du véhicule, le poids du passager du véhicule et/ou son centre de masse.

10. Procédé selon la revendication 9, **caractérisé en ce que** la position du passager du véhicule est saisie par deux dispositifs d'observation de position, **en ce que** le premier dispositif (21) d'observation de position évalue les signaux de sortie de détecteurs qui saisissent l'accélération du véhicule et le poids du passager du véhicule et **en ce que** le deuxième dispositif d'observation de position (22) saisit l'accélération du véhicule.

11. Procédé selon l'une des revendications 9 à 10, **caractérisé en ce que** des signaux de sortie de détecteurs (1, 5) sont évalués à l'aide d'au moins un dispositif d'observation de position (21, 22) et **en ce que** des moyens de retenue servant à protéger les passagers sont commandés en fonction de cette évaluation.

12. Procédé selon l'une des revendications 9 à 11, **caractérisé en ce que** le comportement d'un passager est saisi par modélisation et **en ce que** le modèle tient compte au moins du poids du passager, du déplacement de son centre de masse et du couplage du passager avec le véhicule.

13. Procédé selon l'une des revendications 9 à 12, **caractérisé en ce que** des grandeurs inconnues ou difficiles à déterminer du modèle sont déterminées au moyen d'une identification de paramètres.

14. Procédé selon l'une des revendications 9 à 13, **caractérisé en ce que** l'identification des paramètres peut être débranchée en fonction de la situation.
